(19) Europäisches Patentamt
European Patent Office
Office européen des brevets

(11) **EP 3 553 716 A1**

(12) **EUROPEAN PATENT APPLICATION**
published in accordance with Art. 153(4) EPC

(43) Date of publication:
**16.10.2019 Bulletin 2019/42**

(51) Int Cl.:
***G06Q 10/08*** (2012.01)

(21) Application number: **17877790.0**

(86) International application number:
**PCT/CN2017/097459**

(22) Date of filing: **15.08.2017**

(87) International publication number:
**WO 2018/103369 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.12.2016 CN 201611136523**

(71) Applicant: **Beijing Sankuai Online Technology Co., Ltd**
**Beijing 100102 (CN)**

(72) Inventors:
• **KONG, Bing**
  **Beijing 100102 (CN)**
• **HAO, Jinghua**
  **Beijing 100102 (CN)**
• **ZHANG, Tao**
  **Beijing 100102 (CN)**
• **ZHOU, Yi**
  **Beijing 100102 (CN)**

(74) Representative: **Rooney, John-Paul**
**Withers & Rogers LLP**
**4 More London Riverside**
**London SE1 2AU (GB)**

(54) **METHOD AND DEVICE FOR MONITORING TRANSPORT CAPACITY**

(57) The embodiments of the present disclosure provide a method and device for monitoring transport capacity. The method for monitoring transport capacity includes obtaining positional information and processing progress information of outstanding orders of each performer in a monitored area; and obtaining the transport capacity of the monitored area according to the positional information and the processing progress information of outstanding orders of each performer.

FIG. 2

Description

CROSS-REFERENCE TO RELATED APPLICATION

This application claims priority to Chinese Patent Application No. 201611136523.4, filed on December 9, 2016 and entitled "METHOD, DEVICE AND ELECTRONIC DEVICE FOR MONITORING TRANSPORT CAPACITY", the contents of which are incorporated herein by reference in their entirety.

TECHNICAL FIELD

The present application relates to a method and device for monitoring transport capacity in the field of information technology.

BACKGROUND

In the fields such as food delivery, carpooling and express delivery, a reasonable allocation of transport capacity in respective areas is an important factor for having a quick response to orders and improving the user experience. As an example, the historical order information in one area could be used to estimate the number of orders that will be generated in this area. The distribution of the transport capacity in the area can be calculated based on the positions of performers, such as food deliverymen, goods deliverymen, drivers and the like.

SUMMARY

In view of this, the object of the embodiments of the present application is to provide a method and a device for monitoring transport capacity.
In a first aspect, the embodiments of the present disclosure provide a method for monitoring transport capacity, comprising:

acquiring positional information and processing progress information of outstanding orders of each performer in a monitored area; and
obtaining the transport capacity of the monitored area according to the positional information and the processing progress information of outstanding orders of each performer.

In one embodiment, obtaining the transport capacity of the monitored area according to the positional information and the processing progress information of outstanding orders of each performer comprises:

dividing the monitored area into a plurality of regions; and
obtaining the transport capacity of each region according to the positional information and the processing progress information of outstanding orders of each performer.

In one embodiment, obtaining the transport capacity of each region according to the positional information and the processing progress information of outstanding orders of each performer comprises:

acquiring the number of outstanding orders of each performer;
When there is a performer whose number of outstanding orders is 0, increasing the transport capacity of the region to which the positional information of the performer belongs; and
when there is a performer whose number of outstanding orders is at least 1, increasing the transport capacity of the corresponding region in the monitored area according to the information of each outstanding order.

In one embodiment, increasing the transport capacity of the corresponding region in the monitored area according to the information of each outstanding order comprises:

if the outstanding order is an order which has been responded, increasing the transport capacity of the region to which a completing place of the outstanding order belongs by a preset first adjustment value; and
if the outstanding order is an order which has not been responded, increasing the transport capacity of the region to which a responding place of the outstanding order belongs by a preset second adjustment value.

In one embodiment, the first adjustment value corresponds to a first threshold range to which the number of responded outstanding orders held by the performer of the outstanding order belongs; and
the second adjustment value corresponds to a second threshold range to which the number of non-responded outstanding orders held by the performer of the outstanding order belongs.
In one embodiment, increasing the transport capacity of the corresponding region in the monitored area according to the information of outstanding order further comprises:

acquiring a path from a responding place to a completing place of the outstanding order based on pre-stored map data;
finding a region through which the path passes; and
increasing the transport capacity of the found region.

In one embodiment, obtaining the transport capacity of each region according to the positional information and the processing progress information of outstanding orders of each performer further comprises:

for each region, smoothing the transport capacity of the region according to the transport capacity of adjacent regions of the region; and
using the value obtained by the smoothing as a final transport capacity of the region.

In one embodiment, the method for monitoring transport capacity according to the present disclosure further comprises:

determining the number of orders of each region in a preset future time period; and
determining a transport capacity shortage degree of each region according to the number of orders of each region in the preset future time period and the transport capacity of each region.

In one embodiment, determining the number of orders of the region in a preset future time period comprises:

obtaining a orders amount estimation model by training on historical order information;
determining the number of orders of the monitored area in the preset future time period according to a current date, real-time weather, and the orders amount estimation model;
determining a ratio of the number of orders of the region in the preset future time period according to the historical order information; and
obtaining the number of orders of the region in the preset future time period according to the ratio of the number of orders and the number of orders of the monitored area in the preset future time period.

In one embodiment, dividing the monitored area into a plurality of regions comprises:
dividing the monitored area through a geohash algorithm to obtain the plurality of regions.
In another embodiment, dividing the monitored area into a plurality of regions comprises:

acquiring the positional coordinate points of completing places of historical orders in the monitored area;
clustering a plurality of order clusters according to a density-based clustering algorithm; and
obtaining the plurality of regions by including a range of positional coordinate points of completing places of the orders in each order cluster as one region.

In a second aspect, one embodiment of the present disclosure provide a device for monitoring transport capacity, comprising:

a processor; and
a machine-readable storage medium; wherein the machine-readable storage medium has machine-executable instructions executable by the processor stored thereon, and the processor is caused by the machine-executable instructions to:

acquire positional information and processing progress information of outstanding orders of each performer in a monitored area; and
obtain the transport capacity of the monitored area according to the positional information and the processing progress information of outstanding orders of each performer.

In a third aspect, one embodiment of the present disclosure provide A machine-readable storage medium, having machine-executable instructions stored thereon, wherein when being called and executed by a processor, the machine-executable instructions cause the processor to perform the method for monitoring transport capacity according to the first aspect of the present disclosure.
In the method and device for monitoring transport capacity provided by the embodiments of the present application, the processing progress information of outstanding orders of performers is subtly introduced to monitor the transport capacity of the area. According to the processing progress information of the outstanding orders of a performer, the trajectory showing a positional change of the performer can be estimated, and further, based on the trajectory showing the positional change, the distribution of transport capacity can be monitored in a more accurate and reliable way.
In order to make the above objects, features and advantages of the present application clearer and easy to understand, detailed explanations are made as follows by providing preferred embodiments in conjunction with the accompanying drawings.

BRIEF DESCRIPTION OF THE DRAWINGS

To illustrate the technical solutions of the embodiments of the present disclosure more clearly, the drawings required in the embodiments are briefly described below. It should be understood that the following drawings only show some embodiments of the present disclosure. Therefore, they should not be regarded as limiting the scope, and those ordinary skilled in the art can obtain other related drawings according to these accompanying drawings without any creative work.

FIG. 1 is a schematic diagram of a hardware structure of a device for monitoring transport capacity 100 according to an embodiment of the present disclosure.
FIG. 2 is a flowchart of a method for monitoring transport capacity according to an embodiment of the present disclosure.
FIG. 3 is a schematic diagram of sub-steps included in step S230 shown in FIG. 2 according to an embodiment of the present disclosure.
FIG. 4 is a schematic diagram of sub-steps included in step S230 shown in FIG. 2 according to another embodiment of the present disclosure.

FIG. 5 is a schematic diagram of sub-steps included in step S236 shown in FIG. 4 according to an embodiment of the present disclosure.

FIG. 6 is a schematic diagram of sub-steps included in step S236 shown in FIG. 4 according to another embodiment of the present disclosure.

FIG. 7 is a flowchart of a method for monitoring transport capacity according to another embodiment of the present disclosure.

FIG. 8 is a flowchart of a method for monitoring transport capacity according to yet another embodiment of the present disclosure.

FIG. 9 is a schematic diagram of sub-steps included in step S210 shown in FIG. 8 according to an embodiment of the present disclosure.

FIG. 10 is a flowchart of region division according to an embodiment of the present disclosure.

FIG. 11 is a flowchart of a method for monitoring transport capacity according to still a further embodiment of the present disclosure.

FIG. 12 is a block diagram of functional modules of a transport capacity monitoring logic shown in FIG. 1.

Reference numerals: 100-device for monitoring transport capacity; 110-machine-readable storage medium; 120-processor; 130-network module; 200-transport capacity monitoring logic; 220-information acquiring module; 230- transport capacity obtaining module.

DETAILED DESCRIPTION

In the fields such as food delivery, carpooling and express delivery, a reasonable allocation of transport capacity in respective areas is an important factor for having a quick response to orders and improving the user experience. The positions of performers, such as food deliverymen, goods deliverymen, drivers and the like, are always changing. As one performer moves from one region to another, the transport capacity of each region will change.

In one example, a method for monitoring transport capacity determines the transport capacity of each region based on the current positions of respective performers. However, in such a method, the change of the transport capacity in a future time period is not considered. In an application scenario where the positions of performers change frequently, the accuracy in evaluating the transport capacity of an area is relatively limited when merely relying on the current positional information of each performer. In view that an accurate monitoring of the transport capacity of each region is the basis for the reasonable allocation of the transport capacity of each region, the embodiments of the present disclosure can estimate the positional change of each performer in a future time period according to the processing progress information of outstanding orders of each performer (for the purpose of conciseness, referred to as "information of outstanding orders" hereinafter). As such, the transport capacity of each region can be monitored accurately, thereby further providing a basis for reasonable allocation of the transport capacity of each region.

The technical solutions in the embodiments of the present disclosure will be clearly and completely described in the following with reference to the accompanying drawings in the embodiments of the present disclosure. It is apparent that the described embodiments are only a part, rather than all, of the embodiments of the present disclosure. Generally, the components of the embodiments of the present disclosure described and illustrated in the accompanying drawings herein may be arranged and designed in various different configurations. Therefore, the detailed description of the embodiments of the present disclosure provided in the drawings merely represents some selected embodiments of the present disclosure, rather than being used for limiting the scope to be protected of the present disclosure. All other embodiments obtained by a person skilled in the art based on the embodiments of the present disclosure without creative efforts are within the scope of the present disclosure.

It should be noted that similar reference numerals and letters indicate similar items in the following drawings. Therefore, once an item is defined in one drawing, it is not required to be further defined and explained in subsequent drawings. Meanwhile, in the description of the present disclosure, the terms "first", "second", and the like are used merely for distinguishing description, and are not to be construed as indicating or implying relative importance.

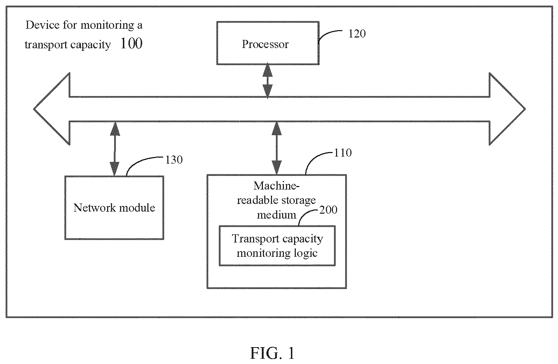

FIG. 1 is a schematic diagram of a hardware structure of a device for monitoring transport capacity 100 according to an embodiment of the present disclosure. The device for monitoring transport capacity 100 in the embodiment of the present disclosure may be a device having a data processing capability such as a server or a computer. As shown in FIG. 1, the device for monitoring transport capacity 100 may include a machine-readable storage medium 110, a processor 120, and a network module 130.

The machine-readable storage medium 110, the processor 120, and the network module 130 are electrically connected with each other, directly or indirectly, to implement data transmission or interaction. For example, these components may be electrically connected with one another by one or more communication buses or signal lines. The machine-readable storage medium 110 has machine-executable instructions stored thereon, corresponding to a transport capacity monitoring logic. The transport capacity monitoring logic 200 may include at least one software function module stored in the machine-readable storage medium 110 in the form of software or firmware. The processor 120 executes various functional applications and data processing, such as implementing the method for monitoring transport capacity in the embodiments of the present disclosure, by operating software programs and the modules stored in the machine-readable storage medium 110, such as the machine-executable instructions corresponding to the transport capacity monitoring logic 200 in the embodiments of the present disclosure.

Here, the machine-readable storage medium 110 may be, but not limited to, a random access memory (RAM), a read only memory (ROM), a programmable read-only memory (PROM), an erasable programmable read-only memory (EPROM), an electric erasable programmable read-only memory (EEPROM), a flash memory, a storage drive (for example, a hard disk drive), a solid state hard disk, a storage disk of any type (such as an optical disk, dvd or the like), or a similar storage medium, or a combination thereof. The machine-readable storage medium 110 may be configured to store a program, and the processor 120 executes the program after receiving an execution instruction.

The processor 120 may be an integrated circuit chip with a signal processing capability. The above processor 120 may be a general processor, including a central processing unit (CPU), a network processor (NP), etc., and may also be a digital signal processor (DSP), an application specific integrated circuit (ASIC), a field-programmable gate array (FPGA) or other programmable logic devices, discrete gate or transistor logic devices, or discrete hardware components, which could implement or execute respective methods, steps, and logical block diagrams disclosed in the embodiments of the present disclosure. The general processor may be a microprocessor, or the processor may be any conventional processor, etc.

The network module 130 is configured to establish communication connection between the device for monitoring transport capacity 100 and an external communication terminal by the network, thereby implementing the transmission and reception operations of network signals and data. The above network signals may include a wireless signal or a wired signal.

It will be understood that the structure shown in FIG. 1 is merely illustrative, and the device for monitoring transport capacity 100 may further include more or less components than those shown in FIG. 1, or have a configuration different from that shown in FIG. 1. The respective components shown in FIG. 1 may be implemented by hardware, software, or a combination thereof.

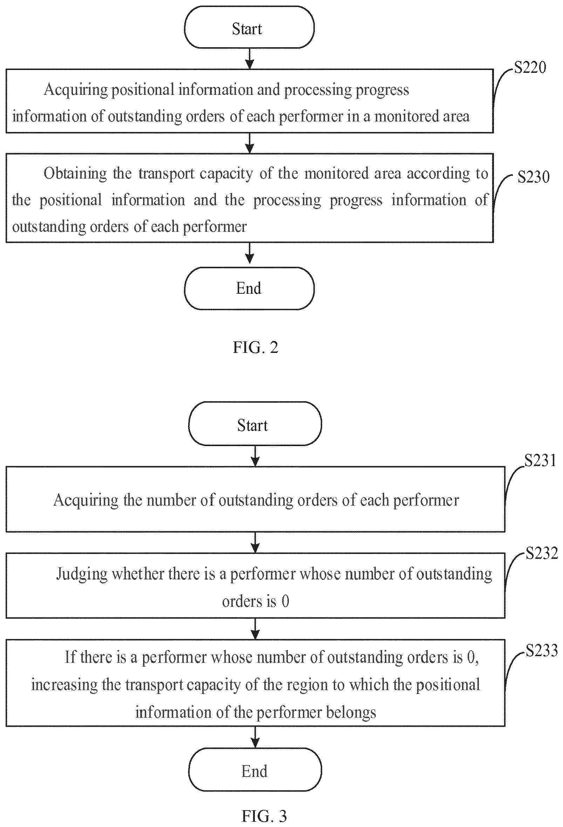

FIG. 2 is a flowchart of a method for monitoring transport capacity according to an embodiment of the present disclosure. The method steps defined by the flow related to the method may be implemented by the processor 120. The specific flow shown in FIG. 2 will be described in detail below.

In step S220: the positional information and the information of outstanding orders of each performer in a monitored area are acquired.

In one example, each performer may carry a handheld terminal or a wearable device. Taking each performer carrying a wearable device for example, the wearable device may include a locating module, a processing module, a communication module, and the like. The locating module may record the positional information of the performer. The processing module may record and adjust the information of outstanding orders of the performer. The communication module may send the positional information and the information of outstanding orders of each performer to the processor 120. In such step, the positional information and the information of outstanding orders of each performer sent by the communication module can be acquired.

The information of outstanding orders may include the information concerning the responding places and the completing places of the outstanding orders of the performer, the information on whether the outstanding orders have been responded, and the like.

It should be understood that, in the embodiments of the present disclosure, the responding places of the outstanding orders may refer to the places where the outstanding orders are received. For example, if an outstanding order is a food delivery order, then the responding place of the food delivery order may be the position of a merchant who has confirmed the order. Correspondingly, the completing place of the food delivery order may be the position of a customer who books the order, and the expression "has been responded" or "responded" means that the deliveryman has received the takeout food required by the customer from the merchant.

As another example, if the outstanding order is a car booking order, then the responding place of the car booking order is the boarding place of the user who books this service. Correspondingly, the completing place of the car booking order is the destination of the user, and the expression "has been responded" or "responded" means that the driver has picked up the user at the boarding place.

In step S230: the transport capacity in the monitored area is obtained according to the positional information and the information of outstanding orders of each performer.

Here, the positional information of each performer represents the current position of each performer, and according to the information of outstanding orders of each performer, such as the responding places and completing places of the outstanding orders, the trajectory showing the positional change of each performer in the future can be estimated. As the position of each performer changes, the transport capacity of the monitored area will also change. For example, if the responding place and completing place of an outstanding order of a performer are outside the monitored area, then it can be estimated that the performer will leave the monitored area in order to complete the outstanding order, thereby reducing the transport capacity of the monitored area. Similarly, if the responding place and the completing place of an outstanding order of a performer outside the monitored area are in the monitored area, it can be estimated that the performer will enter the monitored area in order to complete the outstanding order, thereby increasing the transport capacity of the monitored area.

Correspondingly, the monitored area may include a plurality of regions, and each performer may move among the plurality of regions in the monitored area. In this way, step S230 may include: dividing the monitored area into a plurality of regions; and obtaining the transport capacity of each region according to the positional information and the information of outstanding orders of each performer.

According to the information of the outstanding orders of each performer, the change condition of the region of each performer in a future time period can be estimated. As the region of each performer changes, the transport capacity of each region also changes.

FIG. 3 is a schematic diagram of sub-steps included in step S230 shown in FIG. 2 according to an embodiment of the present disclosure. Referring to FIG. 3, step S230 includes three sub-steps of step S231, step S232 and step S233.

In step S231: the number of outstanding orders of each performer is acquired.

In step S232: whether there is a performer whose number of outstanding orders is 0 is judged.

In step S233: if there is a performer whose number of outstanding orders is 0, the transport capacity of the region to which the positional information of the performer belongs is increased.

Here, the transport capacity of the region to which the positional information of the performer belongs can be increased by a set value, for example 5.

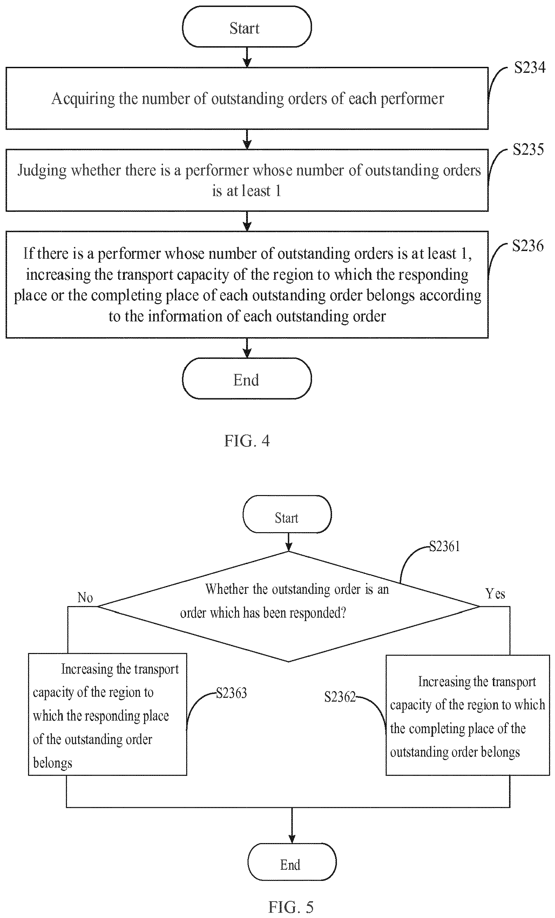

FIG. 4 is a schematic diagram of sub-steps included in step S230 shown in FIG. 2 according to another embodiment of the present disclosure. Referring to FIG. 4, step S230 may further include three sub-steps of step S234, step S235, and step S236.

In step S234: the number of outstanding orders of each performer is acquired.

In step S235: whether a performer whose number of outstanding orders is at least 1 is judged.

In step S236: if there is a performer whose number of outstanding orders is at least 1, the transport capacity of the region to which the responding place or the completing place of each outstanding order belongs is increased according to the information of each outstanding order.

FIG. 5 is a schematic diagram of sub-steps included in step S236 shown in FIG. 4 according to an embodiment of the present disclosure. Referring to FIG. 5, step S236 may include three sub-steps of step S2361, step S2362, and step S2363.

In step S2361: for each outstanding order, whether the outstanding order is an order which has been responded is judged. If the order is an order which has been responded, step S2362 is performed, otherwise step S2363 is performed.

In step S2362: the transport capacity of the region to which the completing place of the outstanding order belongs is increased.

In step S2363: the transport capacity of the region to which the responding place of the outstanding order belongs is increased.

Step S236 may also include other implementing manners depending on actual needs. For example, if an outstanding order is an order which has not been responded, the transport capacity of the region to which the responding place of the outstanding order belongs and the transport capacity of the region to which the completing place of the outstanding order belongs may be separately increased. As another example, different transport capacities may be increased according to the different numbers of outstanding orders of performers. Generally, the fewer the number of outstanding orders of a performer is, the greater the increased transport capacity is. The more the number of outstanding orders of a performer is, the less the increased transport capacity is.

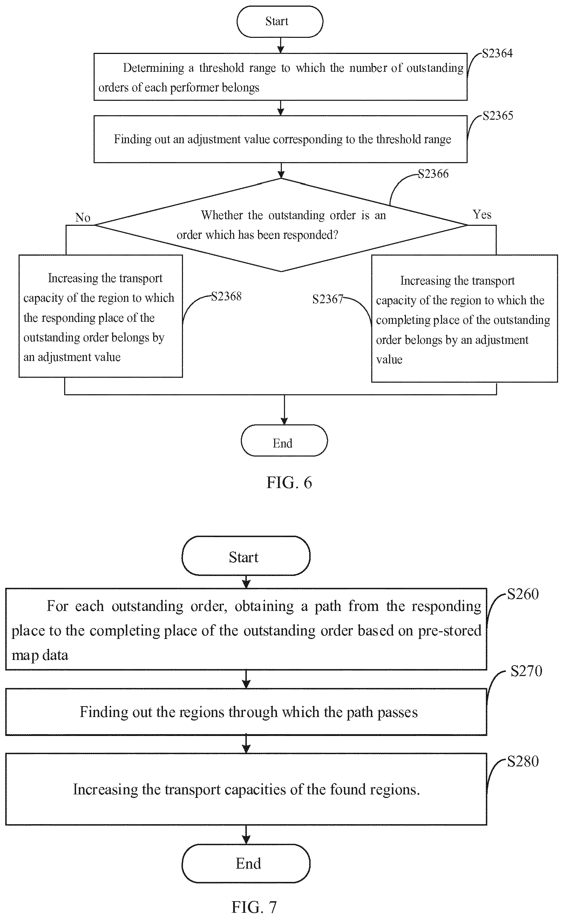

FIG. 6 is a schematic diagram of sub-steps included in step S236 shown in FIG. 4 according to another embodiment of the present disclosure. Referring to FIG. 6, step S236 may further include five sub-steps of step S2364 to step S2368.

In step S2364: a threshold range to which the number of outstanding orders of each performer belongs is determined.

In step S2365: an adjustment value corresponding to the threshold range is found.

In step S2366: for each outstanding order, whether the outstanding order is an order which has been responded is judged. If the order has been responded, step S2367 is performed, otherwise step S2368 is performed.

In step S2367: the transport capacity of the region to which the completing place of the outstanding order belongs is increased by the adjustment value.

In step S2368: the transport capacity of the region to which the responding place of the outstanding order belongs is increased by the adjustment value.

In an embodiment, the threshold range can be flexibly set in a gradient manner according to the actual demand. For example, 1 to 3 is set as a threshold range, 4 to 6 is set as a threshold range, and 7 to 9 is set as a threshold range, etc. The corresponding relationships between different threshold ranges and different transport capacity values may be set. For example, among the listed three threshold ranges, the adjustment value corresponding to the set threshold range 1 to 3 is the largest, the adjustment value corresponding to the threshold range 4 to 6 is less, and the adjustment value corresponding to the threshold range 7 to 9 is the smallest. In this way, by analyzing the threshold range to which the number of outstanding orders of the performer belongs, the corresponding increased transport capacity of the monitored area to which the responding place or completing place of each outstanding order of the performer belongs can be obtained.

In the embodiments of the present disclosure, the performing order of steps S2364 to S2368 may be various. For example, step S2366 of judging whether the outstanding order is an order which has been responded may be performed at first, and then step S2364 and step S2365 of determining the threshold range to which the number of outstanding orders of the performer belongs to and finding the adjustment value corresponding to the threshold range are performed. As another example, step S2364 and step S2365 of determining the threshold range to which the number of outstanding orders of the performer belongs to and finding the adjustment value corresponding to the threshold range, and step S2366 of judging whether the outstanding order is an order which has been responded, may be performed in parallel.

In still another embodiment, step 236 may further include: determining the number of responded orders and the number of non-responded orders in all the outstanding orders of each performer; determining a first threshold range to which the number of responded orders in the outstanding orders of such performer belongs and a second threshold range to which the number of non-responded orders in the outstanding orders of such performer belongs; finding a first adjustment value corresponding to the first threshold range and a second adjustment value corresponding to the second threshold range; increasing the transport capacity of the region to which the completing place of each outstanding order of the performer belongs by the first adjustment value; and increasing the transport capacity of the region to which the responding place of each outstanding order of the performer belongs by the second adjustment value.

The transport capacity of the region through which each performer passes may also be considered to be increased, in addition to the responding places and completing places of the outstanding orders. Therefore, FIG. 7 is a flowchart of a method for monitoring transport capacity according to another embodiment of the present disclosure. As shown in FIG. 7, the method for monitoring transport capacity may further include step S260, step S270, and step S280.

In step S260: for each outstanding order, a path from the responding place to the completing place of the outstanding order is obtained based on pre-stored map data.

In step S270: the regions through which the path passes are found.

In step S280: the transport capacities of the found regions are increased.

The transport capacities of the found regions can be flexibly increased. For example, the transport capacity of each found region may be increased by a fixed value. As another example, a transport capacity calculation model may be established, and the transport capacity of each found region is increased by a different value according to the difference in ratio of the number of performers to the number of outstanding orders in this region. In general, if the ratio of the number of performers to the number of outstanding orders in a region is larger, the transport capacity of such region may be increased by a larger value; if the ratio of the number of performers to the number of outstanding orders in a region is smaller, the transport capacity of such region may be increased by a smaller value.

In order to ensure that the transport capacity of each region can be increased by fully using performers passing through the region, for each region, the information of the performers passing through the region can be sent to a terminal in the responding place of the region. For example, information of an outstanding order in a region through which a performer will soon pass may be sent to a wearable device of the performer. An outstanding order in a region through which a performer may pass may be automatically assigned to the passing performer.

Considering that the movement of performers, such as food deliverymen, goods deliverymen, drivers and the like, is random, and they could quickly move from one region to an adjacent region, the method for monitoring transport capacity in the present embodiments may further include: acquiring, for each region, the transport capacity of an adjacent region of such region, and performing comprehensive processing, such as smoothing, on the transport capacity of the adjacent region and the transport capacity of such region, to obtain the final transport capacity of such region. For example, for each region, the transport capacity of such region is smoothed according to the transport capacity of the adjacent region of such region, and the value obtained by the smoothing processing is used as the final transport capacity of the region.

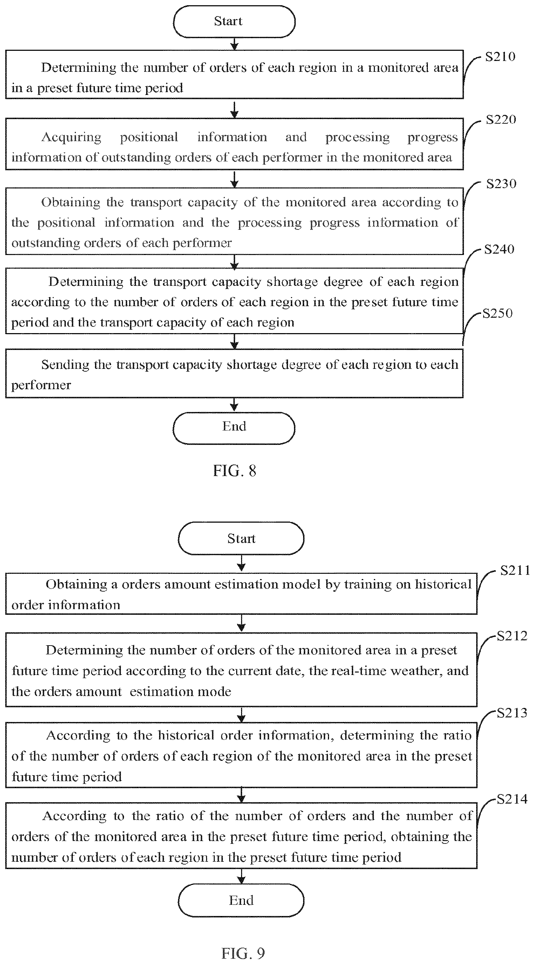

On the basis of the above, FIG. 8 is a flowchart of a method for monitoring transport capacity according to yet another embodiment of the present disclosure. As shown in FIG. 8, the embodiment of the present disclosure further provides a method for monitoring transport capacity, which can analyze the transport capacity shortage degree. The method further includes step S210 and step S240.

In step S210: the number of orders of each region in the monitored area in a preset future time period is determined.

Here, step S210 has a plurality of implementing manners, as long as the number of orders in each region can be estimated. For example, the average number of orders of a previous time period of each region, such as a previous quarter, a previous month and a previous week, can be calculated, and the average number of orders could be used as the number of orders of each region in the preset future time period. As another example, big data analysis may be performed on historical order information of each region, so that the change condition of the number of orders of each region in different time periods, such as in the morning, afternoon, night, several hours and several minutes for example 15 minutes time period, can be obtained. In this way, the number of orders of each region in a specific time period in the historical order information can be used as the number of orders of each region in the specific time period.

FIG. 9 is a schematic diagram of sub-steps included in step S210 shown in FIG. 8 according to an embodiment of the present disclosure. Referring to FIG. 9, the embodiment of the present disclosure provides one implementing solution of step S210, which may include four sub-steps of step S211, step S212, step S213, and step S214.

In step 211: a orders amount estimation model is obtained by training on historical order information.

Here, the historical order information may include information such as the number of orders in the history, the time of placing the order, the current date, and the real-time weather of the monitored area. It should be understood that the orders amount estimation model may have different estimation rules. For example, moving average estimation, exponential smoothing estimation and the like may be used, which is not limited by the present embodiment. In order to ensure the calculation efficiency, in one embodiment, the orders amount estimation model can be obtained by offline training, without online training, to meet the real-time calculation requirements.

In step S212: the number of orders of the monitored area in a preset future time period is determined according to the current date, the real-time weather, and the orders amount estimation model.

For example, the number of orders of the monitored area in a preset future time period can be obtained according to whether the current date is a working day or a holiday, whether the real-time weather is raining, or the like. For example, if the current date is a working day, the real-time weather is raining, and the preset future time period is 11:30-14:00, generally speaking, the calculated number of orders may be higher than that of other time periods.

In step S213: according to the historical order information, the ratio of the number of orders of each region of the monitored area in the preset future time period is determined.

Here, the average number of orders of each region and the monitored area in a previous time period, such as a previous quarter, a previous month, and a previous week, may be calculated. In this way, the percentage of the average number of orders of each region in the average number of orders of the monitored area can be regarded as the ratio of the number of orders of each region in the preset future time period. Big data analysis can also be performed on the historical order information to obtain the change condition of the number of orders of each region and the monitored area in different time periods, such as in the morning, afternoon, night, and several hours. The percentage of the number of orders of each region in the number of orders of the monitored area in a specific time period in the historical order information is regarded as the ratio of the number of orders of each region in such specific time period.

In step S214: according to the ratio of the number of orders and the number of orders of the monitored area in the preset future time period, the number of orders of each region in the preset future time period is obtained.

In such step 214, by calculating a product of the ratio of the number of orders of each region in the preset future time period and the number of orders of the monitored area in the preset future time period, the number of orders of each region in the preset future time period is obtained.

By the above manner, the number of orders (total amount) of the monitored area in the preset future time period is firstly calculated, then the number of orders of each region in the preset future time period is calculated according to the ratio of the number of orders of each region in the preset future time period, in this way, the efficiency is relatively high and the calculation results are more accurate. In order to ensure the calculation efficiency, in one example, the ratio of the number of orders of each region and the number of orders of each region can be obtained by offline training, without online training, to meet real-time calculation requirements.

In step S240: the transport capacity shortage degree of each region is determined according to the number of orders of each region in the preset future time period and the transport capacity of each region obtained in the above steps S220 and S230.

In view of actual needs, as shown in FIG. 8, the method for monitoring transport capacity may further include step S250.

In step S250: the transport capacity shortage degree of each region is sent to each performer in the monitored area.

In one example, sending the transport capacity shortage degree to each performer in the monitored area includes sending the transport capacity shortage degree to a terminal device of each performer in the monitored area, such as a wearable device. The wearable device carried by each performer may also include a display module or/and a voice module. After the transport capacity shortage degree of each region is obtained, the transport capacity shortage degree is sent to the wearable device of each performer in the monitored area for display and/or voice reminding, so that the performer, in particular, a performer whose number of outstanding orders is less, for example 0, is guided to the region where the transport capacity is relatively short. Therefore, the responding efficiency of orders can be improved, thereby improving the user experience.

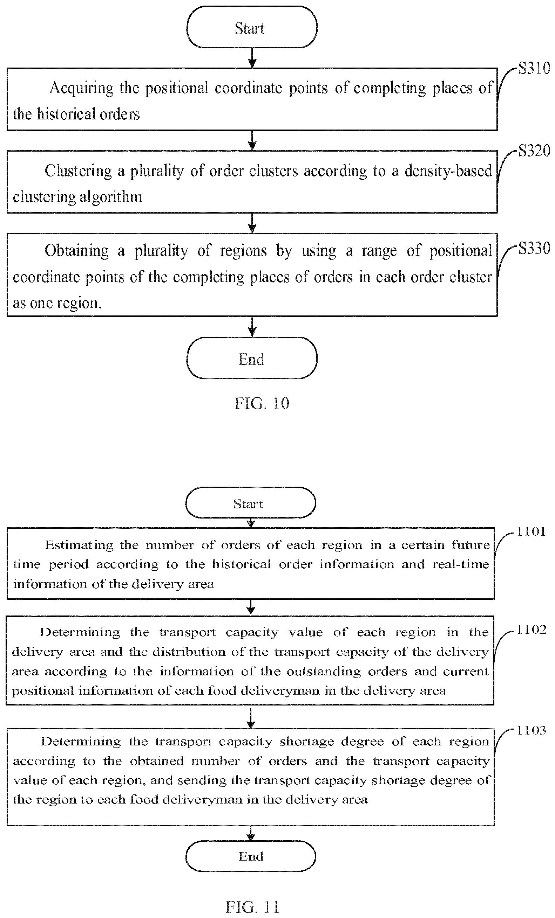

In the embodiments of the present disclosure, the monitored area may be divided in many manners. For example, the monitored area may be divided into multiple regions, for example, the monitored area may be divided by the geohash algorithm to obtain multiple regions. As another example, as shown in FIG. 10, the monitored area may be divided into a plurality of regions through steps S310, S320, and S330.

In step S310: the positional coordinate points of completing places of the historical orders are obtained.

In step S320: a plurality of order clusters are clustered according to a density-based clustering algorithm.

In step S330: a plurality of regions are obtained by using a range of positional coordinate points of the completing places of orders in each order cluster as one region.

In order to make the solutions of the embodiments of the present disclosure clearer, the solution of the present disclosure is explained by using the following example, wherein the performer is a food deliveryman, the monitored area is a delivery area, and the delivery area is divided into a plurality of regions with certain side length based on geohash coding algorithm. The following steps 1101-1103 are performed during transport capacity monitoring.

In step 1101: the number of orders of each region in a certain future time period is estimated according to the historical order information and real-time information of the delivery area.

In one example, a orders amount estimation model can be offline-trained based on the historical order information. The historical order information mainly includes the total order number information in the history and the time of placing the order of the delivery area, and the fact whether the day is a working day, and the weather of the day. Real-time information such as a current number of orders and the weather is obtained, and is combined with the orders amount estimation model to estimate the total number of orders of the delivery area in the future time period. The ratio of the number of orders of each region is obtained according to the historical order information. According to the product of the ratio and the total number of orders of the delivery area, the number of orders of each region in a certain future time period is obtained.

In step 1102: the transport capacity value of each region in the delivery area and the distribution of the transport capacity of the delivery area are determined according to the information of the outstanding orders and current positional information of each food deliveryman in the delivery area.

The positional information of all food deliverymen in the delivery area and the information of the outstanding orders of each food deliveryman are obtained. The following calculation can be performed for each food deliveryman.

The current region and the list of outstanding orders of the food deliveryman are acquired. The number of outstanding orders of the food deliveryman is counted as $\kappa$.

If the number of outstanding orders of the food deliveryman is 0, $\kappa=0$, then the transport capacity of the region where the food deliveryman is located is increased by $\varepsilon$.

If the number of outstanding orders of the food deliveryman is not 0, $\kappa>0$, then all the outstanding orders of the food deliveryman are traversed. For an outstanding order which has not been responded, the transport capacity of the region to which the responding place of the outstanding order belongs is increased by $\frac{\alpha}{k^{\gamma}}$. For an outstanding order which has been responded but not delivered, the transport capacity of the region to which the completing place of the outstanding order belongs is increased by $\frac{\beta}{k^{\gamma}}$.

Here, $\varepsilon$, $\alpha$, $\beta$ and $\gamma$ are the fixed parameter values set by the system, for example, $\varepsilon=1$, $\alpha=0.6$, $\beta=0.7$ and $\gamma=0.8$.

Since the movement of the food deliveryman is random and the food deliveryman can reach an adjacent region relatively quickly, the transport capacity of each region is smoothed. Thus, the transport capacity of one region is obtained by comprehensive calculation of the region and the surrounding regions. When a region b has 8 adjacent regions, the embodiment provides a method for calculating a transport capacity, as shown in the following formula (1):

$$R_b = R_b \times \mu + (1 - \mu) \times \sum_{i=1}^{8} A_i \times 1/8 \qquad (1).$$

Here, $R_b$ represents the transport capacity of the region b, $A_i$ represents the adjacent region of region b, and $\mu$ represents a smoothing factor.

In step 1103: the transport capacity shortage degree of each region is determined according to the obtained number of orders and the transport capacity value of each region, and the transport capacity shortage degree of the region is sent to each food deliveryman in the delivery area.

It is assumed that the orders amount of a certain region in the future time t is $s_{geohash-t}$, and then the transport capacity is $r_{geohash-t}$.

The present embodiment provides a method for calculating a transport capacity shortage value, which is shown in the following formula (2).

$$n = \frac{s_{geohash-t}}{r_{geohash-t}} \times f(s_{geohash-t}) \qquad (2).$$

n is the transport capacity shortage value and $f$ is a logarithmic function for adjusting a confidence. The more the orders amount is, the more reliable the result is.

In order to visually display the transport capacity shortage degree of the delivery area to the food deliveryman, the transport capacity shortage degree and the orders amount value of each region in the delivery area may be sent to the food deliveryman in an interactive manner such as a heat map or a voice.

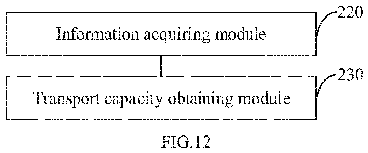

FIG. 12 is a functional block diagram of a transport capacity monitoring logic according to an embodiment of the present disclosure. Functionally, the transport capacity monitoring logic 200 includes an information acquiring module 220 and a transport capacity obtaining module 230.

The information acquiring module 220 is configured to acquire the positional information of each performer and the information of outstanding orders of each performer in a monitored area.

Since the information acquiring module 220 and step S220 in FIG. 2 are similar in implementation principle, no further explanation is repeated here.

The transport capacity obtaining module 230 is configured to obtain the transport capacity in the monitored area according to the positional information and the information of outstanding orders of each performer.

Since the transport capacity obtaining module 230 and step S230 in FIG. 2 are similar in implementation principle, no further explanation is repeated here.

The monitored area may include a plurality of regions, in which case, the transport capacity obtaining module 230 may be configured to divide the monitored area into a plurality of regions; and obtain the transport capacity of each region according to the information region of each performer and the information of outstanding orders of each performer.

In one embodiment, the transport capacity obtaining module 230 may include a first obtaining sub-module, a first increasing sub-module, and a second increasing sub-module.

The first obtaining sub-module may be configured to obtain the number of outstanding orders of each performer in the monitored area. The first increasing sub-module may be configured to increase the transport capacity of the region to which the positional information belongs according to the positional information of the performer whose number of the outstanding orders is zero. The second increasing sub-module may be configured to increase the transport capacity of the corresponding region in the monitored area according to the information of each outstanding order.

In one embodiment, increasing the transport capacity of the corresponding region in the monitored area according to the information of the outstanding orders includes: if the outstanding order is an order which has been responded, increasing the transport capacity of the region to which the completing place of the outstanding order belongs by a preset adjustment value; and if the outstanding order is an order which has not been responded, increasing the transport capacity of the region to which the responding place of the outstanding order belongs by an adjustment value.

In one embodiment, the adjustment value corresponds to a threshold range to which the number of outstanding orders held by the performer of the outstanding order belongs.

In one embodiment, the second increasing sub-module further includes a second obtaining sub-module, a finding sub-module and a third increasing sub-module.

The second obtaining sub-module may be configured to, in combination with pre-stored map data, obtain a path from the responding place to the completing place of an outstanding order. The finding sub-module may be configured to find a region through which the path passes. The transport capacity increasing sub-module may be configured to increase the transport capacity of the found region.

In one embodiment, the second increasing sub-module further includes a processing sub-module and a first determining sub-module.

The processing sub-module may be configured to smooth the transport capacity of a region according to the transport capacity of the adjacent region of the region for every region. The first determining sub-module may be configured to use the value obtained by the smoothing processing as the final transport capacity of the region.

In one embodiment, the transport capacity monitoring logic further includes a second determining sub-module and a third determining sub-module.

The second determining sub-module may be configured to determine the number of orders of each region in the monitored area in a preset future time period. The third determining sub-module may be configured to determine a transport capacity shortage degree of each region according to the number of orders of each region in the preset future time period and the transport capacity of each region.

In one embodiment, determining the number of orders of each region in the monitored area in a preset future time period includes: obtaining a orders amount estimation model by training on historical order information; determining, according to the current date, the real-time weather, and the orders amount estimation model, the number of orders of the monitored area in the preset future time period; determining, according to the historical order information, the ratio of the number of orders of the region in the preset future time period; and obtaining, by calculating the product of the ratio of the number of orders of the region in the preset future time period and the number of orders of the monitored area in the preset future time period, the number of orders of the region in the preset future time period.

In one embodiment, the transport capacity obtaining module 230 may further include a first region dividing sub-module. The first dividing sub-module may divide the monitored area by a geohash algorithm to obtain a plurality of regions.

In another embodiment, the transport capacity obtaining module 230 may further include a third obtaining sub-module, an order cluster obtaining sub-module, and a second region dividing sub-module. The third obtaining sub-module may be configured to obtain the positional coordinate points of completing places of historical orders in the monitored area. The order cluster obtaining sub-module may be configured to cluster a plurality of order clusters according to a density-based clustering algorithm. The second region dividing sub-module may be configured to obtain a plurality of regions by using the range of positional coordinate points of the order completing places of the orders in each order cluster as a region.

According to the embodiments of the present disclosure, there is also provided a machine-readable storage medium, including machine-executable instructions, for example, the machine-readable storage medium 110 of FIG. 1. The machine-executable instructions are executable by the processor 120 in the device for monitoring transport capacity 100 to implement the method for monitoring transport capacity described above.

According to the method for monitoring transport capacity and the device for monitoring transport capacity 100 in the embodiments of the present disclosure, the processing progress information of outstanding orders of the performer is subtly introduced to more accurately describe the transport capacity distribution of each region. The transport capacity distribution information is sent to each performer to guide the performer whose number of outstanding orders is small, for example 0, to the area where the transport capacity is tight, thereby further ensuring reasonable distribution of the transport capacity among regions and improving the user experience. The orders amount estimation, data statistics and other work are completed offline, and the efficiency is relatively high, thereby meeting the real-time calculation requirements. The method and the device have a wide range of application and can be applied to the scenes such as food delivery, carpooling, and real-time logistics.

In the several embodiments of the present disclosure, it should be understood that the disclosed device and method may also be implemented in other manners. The above described device and method embodiments are merely illustrative, for example, the flowcharts and block diagrams in the drawings illustrate system architectures, functions and operations that may be implemented based on the devices, methods, and computer program products according to some embodiments of the present disclosure. In this regard, each block of the flowcharts or block diagrams can represent a module, a program segment, or a portion of code, and the module, program segment, or portion of code includes one or more executable instructions for implementing specific logic functions. It should also be noted that, in some alternative implementing manners, the functions noted in the blocks may also occur in a sequence different from those illustrated in the drawings. For example, two consecutive blocks may be executed substantially in parallel, and may sometimes be executed in the opposite order, depending on the functions involved. It is also noted that each block of the block diagrams and/or flowcharts, and combinations of the blocks in the block diagrams and/or flowcharts can be implemented in a dedicated hardware-based system that performs the specified functions or actions, or can be implemented by the combination of dedicated hardware and computer instructions.

In addition, respective functional modules in each embodiment of the present disclosure may be integrated to form a separate portion, or each module may exist separately, or two or more modules may be integrated to form a separate portion.

The functions may be stored in a computer readable storage medium if implemented in the form of a software functional module and sold or used as a separate product. Based on such understanding, parts of the technical solutions of the present disclosure, which are essential or contribute to the prior art, or a portion of the technical solutions may be embodied in the form of a software product. The computer software product is stored in a storage medium, including a plurality of instructions, causing a computer device (which may be a personal computer, the device for monitoring transport capacity 100, or network device, etc.) to perform all or part of the steps of the method described in various embodiments of the present disclosure. The foregoing storage medium includes: a U disk, a mobile hard disk, a read-only memory (ROM), a random access memory (RAM), a magnetic disk, or an optical disk, and other mediums capable of storing the program codes. It is to be understood that the terms "include", "comprise", "contain" or any other variants thereof are intended to cover non-exclusive including, such that the process, method, article, or device including a plurality of elements includes not only those elements but also other elements that are not explicitly listed, or also includes the elements that are inherent to such a process, method, item, or device. Without more limitations, the element defined by the phrase "including a ..." does not exclude the presence of additional equivalent elements in the process, method, item, or device that includes the element.

The foregoing descriptions are merely preferred embodiments of the present disclosure, and are not intended to limit the present disclosure. Various changes and modifications may be made to the present disclosure for those skilled in the art. Any modifications, equivalent substitutions, improvements, etc., made within the spirit and principles of the present disclosure shall be within the scope of the present disclosure.

**Claims**

1. A method for monitoring transport capacity, comprising:

   acquiring positional information and processing progress information of outstanding orders of each performer in a monitored area; and
   obtaining the transport capacity of the monitored area according to the positional information and the processing progress information of outstanding orders of each performer.

**2.** The method for monitoring transport capacity according to claim 1, wherein obtaining the transport capacity of the monitored area according to the positional information and the processing progress information of outstanding orders of each performer comprises:

> dividing the monitored area into a plurality of regions; and
> obtaining the transport capacity of each region according to the positional information and the processing progress information of outstanding orders of each performer.

**3.** The method for monitoring transport capacity according to claim 2, wherein obtaining the transport capacity of each region according to the positional information and the processing progress information of outstanding orders of each performer comprises:

> acquiring the number of outstanding orders of each performer;
> when there is a performer whose number of outstanding orders is 0, increasing the transport capacity of the region to which the positional information of the performer belongs; and
> When there is a performer whose number of outstanding orders is at least 1, increasing the transport capacity of the corresponding region in the monitored area according to the information of each outstanding order.

**4.** The method for monitoring transport capacity according to claim 3, wherein increasing the transport capacity of the corresponding region in the monitored area according to the information of each outstanding order comprises:

> if the outstanding order is an order which has been responded, increasing the transport capacity of the region to which a completing place of the outstanding order belongs by a preset first adjustment value; and
> If the outstanding order is an order which has not been responded, increasing the transport capacity of the region to which a responding place of the outstanding order belongs by a preset second adjustment value.

**5.** The method for monitoring transport capacity according to claim 4, wherein

> the first adjustment value corresponds to a first threshold range to which the number of responded outstanding orders held by the performer of the outstanding order belongs; and
> the second adjustment value corresponds to a second threshold range to which the number of non-responded outstanding orders held by the performer of the outstanding order belongs.

**6.** The method for monitoring transport capacity according to claim 3, wherein increasing the transport capacity of the corresponding region in the monitored area according to the information of outstanding order further comprises:

> acquiring a path from a responding place to a completing place of the outstanding order based on pre-stored map data;
> finding a region through which the path passes; and
> increasing the transport capacity of the found region.

**7.** The method for monitoring transport capacity according to claim 2, wherein obtaining the transport capacity of each region according to the positional information and the processing progress information of outstanding orders of each performer further comprises:

> for each region, smoothing the transport capacity of the region according to the transport capacity of adjacent regions of the region; and
> using the value obtained by the smoothing as a final transport capacity of the region.

**8.** The method for monitoring transport capacity according to claim 2, further comprising:

> determining the number of orders of each region in a preset future time period; and
> determining a transport capacity shortage degree of each region according to the number of orders of each region in the preset future time period and the transport capacity of each region.

**9.** The method for monitoring transport capacity according to claim 8, wherein determining the number of orders of the region in a preset future time period comprises:

> obtaining a orders amount estimation model by training on historical order information;
> determining the number of orders of the monitored area in the preset future time period according to a current date, real-time weather, and the orders amount estimation model;
> determining a ratio of the number of orders of the region in the preset future time period according to the historical order information; and
> obtaining the number of orders of the region in the preset future time period according to the ratio of the number of orders and the number of orders of the monitored area in the preset future time period.

10. The method for monitoring transport capacity according to claim 2, wherein dividing the monitored area into a plurality of regions comprises:
dividing the monitored area through a geohash algorithm to obtain the plurality of regions.

11. The method for monitoring transport capacity according to claim 2, wherein dividing the monitored area into a plurality of regions comprises:

acquiring the positional coordinate points of completing places of historical orders in the monitored area;
clustering a plurality of order clusters according to a density-based clustering algorithm; and
obtaining the plurality of regions by including a range of positional coordinate points of completing places of the orders in each order cluster as one region.

12. A device for monitoring transport capacity, comprising:

a processor; and
a machine-readable storage medium; wherein the machine-readable storage medium has machine-executable instructions executable by the processor stored thereon, and the processor is caused by the machine-executable instructions to:

acquire positional information and processing progress information of outstanding orders of each performer in a monitored area; and
obtain the transport capacity of the monitored area according to the positional information and the processing progress information of outstanding orders of each performer.

13. The device for monitoring transport capacity according to claim 12, wherein when obtaining the transport capacity of the monitored area according to the positional information and the processing progress information of outstanding orders of each performer, the processor is caused by the machine-executable instructions to:

divide the monitored area into a plurality of regions; and
obtain the transport capacity of each region according to the positional information and the processing progress information of outstanding orders of each performer.

14. The device for monitoring transport capacity according to claim 13, wherein when obtaining the transport capacity of each region according to the positional information and the processing progress information of outstanding orders of each performer, the processor is caused by the machine-executable instructions to:

acquire the number of outstanding orders of each performer;
when there is a performer whose number of outstanding orders is 0, increase the transport capacity of the region to which the positional information of such performer belongs; and
when there is a performer whose number of outstanding orders is at least 1, increase the transport capacity of the corresponding region in the monitored area according to the information of each outstanding order.

15. A machine-readable storage medium, having machine-executable instructions stored thereon, wherein when being called and executed by a processor, the machine-executable instructions cause the processor to perform the method for monitoring transport capacity according to claim 1.

FIG. 1

```
                        ┌──────────────┐
                        │    Start     │
                        └──────┬───────┘
                               │
                               ▼                                    S220
   ┌──────────────────────────────────────────────────────────┐
   │   Acquiring positional information and processing progress │
   │ information of outstanding orders of each performer in a monitored area │
   └──────────────────────────────┬───────────────────────────┘
                                   │
                                   ▼                               S230
   ┌──────────────────────────────────────────────────────────┐
   │  Obtaining the transport capacity of the monitored area according to │
   │ the positional information and the processing progress information of │
   │ outstanding orders of each performer                      │
   └──────────────────────────────┬───────────────────────────┘
                                   │
                                   ▼
                        ┌──────────────┐
                        │     End      │
                        └──────────────┘
```

FIG. 2

```
                        ┌──────────────┐
                        │    Start     │
                        └──────┬───────┘
                               │
                               ▼                                    S231
   ┌──────────────────────────────────────────────────────────┐
   │   Acquiring the number of outstanding orders of each performer │
   └──────────────────────────────┬───────────────────────────┘
                                   │
                                   ▼                               S232
   ┌──────────────────────────────────────────────────────────┐
   │  Judging whether there is a performer whose number of outstanding │
   │                         orders is 0                       │
   └──────────────────────────────┬───────────────────────────┘
                                   │
                                   ▼                               S233
   ┌──────────────────────────────────────────────────────────┐
   │  If there is a performer whose number of outstanding orders is 0, │
   │ increasing the transport capacity of the region to which the positional │
   │        information of the performer belongs              │
   └──────────────────────────────┬───────────────────────────┘
                                   │
                                   ▼
                        ┌──────────────┐
                        │     End      │
                        └──────────────┘
```

FIG. 3

Start

Acquiring the number of outstanding orders of each performer — S234

Judging whether there is a performer whose number of outstanding orders is at least 1 — S235

If there is a performer whose number of outstanding orders is at least 1, increasing the transport capacity of the region to which the responding place or the completing place of each outstanding order belongs according to the information of each outstanding order — S236

End

FIG. 4

Start

Whether the outstanding order is an order which has been responded? — S2361

No

Yes

Increasing the transport capacity of the region to which the responding place of the outstanding order belongs — S2363

Increasing the transport capacity of the region to which the completing place of the outstanding order belongs — S2362

End

FIG. 5

Start

Determining a threshold range to which the number of outstanding orders of each performer belongs ⌐S2364

Finding out an adjustment value corresponding to the threshold range ⌐S2365

S2366

No ← Whether the outstanding order is an order which has been responded? → Yes

Increasing the transport capacity of the region to which the responding place of the outstanding order belongs by an adjustment value  ⌐S2368

S2367⌐ Increasing the transport capacity of the region to which the completing place of the outstanding order belongs by an adjustment value

End

FIG. 6

Start

For each outstanding order, obtaining a path from the responding place to the completing place of the outstanding order based on pre-stored map data ⌐S260

Finding out the regions through which the path passes ⌐S270

Increasing the transport capacities of the found regions. ⌐S280

End

FIG. 7

17

Start

Determining the number of orders of each region in a monitored area in a preset future time period — S210

Acquiring positional information and processing progress information of outstanding orders of each performer in the monitored area — S220

Obtaining the transport capacity of the monitored area according to the positional information and the processing progress information of outstanding orders of each performer — S230

Determining the transport capacity shortage degree of each region according to the number of orders of each region in the preset future time period and the transport capacity of each region — S240

Sending the transport capacity shortage degree of each region to each performer — S250

End

FIG. 8

Start

Obtaining a orders amount estimation model by training on historical order information — S211

Determining the number of orders of the monitored area in a preset future time period according to the current date, the real-time weather, and the orders amount estimation mode — S212

According to the historical order information, determining the ratio of the number of orders of each region of the monitored area in the preset future time period — S213

According to the ratio of the number of orders and the number of orders of the monitored area in the preset future time period, obtaining the number of orders of each region in the preset future time period — S214

End

FIG. 9

```
                    ┌─────────────┐
                    │    Start    │
                    └──────┬──────┘
                           ▼
┌──────────────────────────────────────────────────┐  S310
│  Acquiring the positional coordinate points of     │
│  completing places of the historical orders        │
└──────────────────────────┬─────────────────────────┘
                           ▼
┌──────────────────────────────────────────────────┐  S320
│  Clustering a plurality of order clusters          │
│  according to a density-based clustering algorithm │
└──────────────────────────┬─────────────────────────┘
                           ▼
┌──────────────────────────────────────────────────┐  S330
│  Obtaining a plurality of regions by using a       │
│  range of positional coordinate points of the      │
│  completing places of orders in each order         │
│  cluster as one region.                            │
└──────────────────────────┬─────────────────────────┘
                           ▼
                    ┌─────────────┐
                    │     End     │
                    └─────────────┘
```

FIG. 10

```
                    ┌─────────────┐
                    │    Start    │
                    └──────┬──────┘
                           ▼
┌──────────────────────────────────────────────────┐  1101
│  Estimating the number of orders of each region    │
│  in a certain future time period according to the  │
│  historical order information and real-time         │
│  information of the delivery area                   │
└──────────────────────────┬─────────────────────────┘
                           ▼
┌──────────────────────────────────────────────────┐  1102
│  Determining the transport capacity value of each  │
│  region in the delivery area and the distribution  │
│  of the transport capacity of the delivery area    │
│  according to the information of the outstanding    │
│  orders and current positional information of each  │
│  food deliveryman in the delivery area             │
└──────────────────────────┬─────────────────────────┘
                           ▼
┌──────────────────────────────────────────────────┐  1103
│  Determining the transport capacity shortage       │
│  degree of each region according to the obtained   │
│  number of orders and the transport capacity       │
│  value of each region, and sending the transport   │
│  capacity shortage degree of the region to each    │
│  food deliveryman in the delivery area             │
└──────────────────────────┬─────────────────────────┘
                           ▼
                    ┌─────────────┐
                    │     End     │
                    └─────────────┘
```

FIG. 11

| Information acquiring module | ⟋220 |
| Transport capacity obtaining module | ⟋230 |

FIG.12

<table>
<tr><td colspan="2"><strong>INTERNATIONAL SEARCH REPORT</strong></td><td>International application No.<br>PCT/CN2017/097459</td></tr>
</table>

**A. CLASSIFICATION OF SUBJECT MATTER**

G06Q 10/08 (2012.01) i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNKI, CNPAT, WPI, EPODOC: 订单, 运力, 位置, 进展, 进度, 区域, 预测, 模型, order, transport, capacity, location, schedule, area, predict, model

**C. DOCUMENTS CONSIDERED TO BE RELEVANT**

| Category* | Citation of document, with indication, where appropriate, of the relevant passages | Relevant to claim No. |
|---|---|---|
| X | CN 105844349 A (SHANGHAI 100ME NETWORK TECHNOLOGY CO., LTD.), 10 August 2016 (10.08.2016), description, paragraphs [0084]-[0089] and [0118] | 1-7, 10-15 |
| Y | CN 105844349 A (SHANGHAI 100ME NETWORK TECHNOLOGY CO., LTD.), 10 August 2016 (10.08.2016), description, paragraphs [0084]-[0089] and [0118] | 8, 9 |
| Y | CN 105373840 A (SHENZHEN TIANHANGJIA TECHNOLOGY CO., LTD.), 02 March 2016 (02.03.2016), description, paragraphs [0012]-[0017] and [0042] | 8, 9 |
| A | CN 105719110 A (BEIJING XIAODU INFORMATION TECHNOLOGY CO., LTD.), 29 June 2016 (29.06.2016), entire document | 1-15 |
| A | CN 104751271 A (JINGYUAN (SHANGHAI) INFORMATION TECHNOLOGY CO., LTD.), 01 July 2015 (01.07.2015), entire document | 1-15 |
| A | WO 2011014076 A1 (PAULSEN, T.), 03 February 2011 (03.02.2011), entire document | 1-15 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 September 2017 | 19 October 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>MU, Ying<br><br>Telephone No. (86-10) 61648469 |

Form PCT/ISA/210 (second sheet) (July 2009)

**INTERNATIONAL SEARCH REPORT**
Information on patent family members

| | International application No. |
| --- | --- |
| | PCT/CN2017/097459 |

| Patent Documents referred in the Report | Publication Date | Patent Family | Publication Date |
| --- | --- | --- | --- |
| CN 105844349 A | 10 August 2016 | None | |
| CN 105373840 A | 02 March 2016 | None | |
| CN 105719110 A | 29 June 2016 | None | |
| CN 104751271 A | 01 July 2015 | None | |
| WO 2011014076 A1 | 03 February 2011 | NO 20092789 A | 01 February 2011 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611136523